# FASCICULE DE BREVET EUROPEEN

(11) **EP 2 612 044 B1**
(45) Date de publication et mention de la délivrance du brevet: **29.07.2015**
(21) Numéro de dépôt: 11764814.7
(22) Date de dépôt: 30.08.2011
(51) Int. Cl.: F16C 7/04, G01L 5/10

(54) **BIELLE POUR MÉCANISME AÉRONAUTIQUE, ET MÉCANISME AÉRONAUTIQUE COMPRENANT UNE TELLE BIELLE**
Koppelstange für eine Luftfahrtvorrichtung und Luftfahrtvorrichtung mit einer solchen Koppelstange
Connecting rod for aerospace mechanism and aerospace mechanism comprising such a connecting rod

(30) Priorité: 30.08.2010 FR 1056867
(43) Date de publication de la demande: 10.07.2013
(73) Titulaire: Fly By Wire Systems France, 26240 Saint-Vallier, (FR)
(72) Inventeur: BOUILLOT, Franck, F-26000 Valence (FR); MILORD, Cédric, F-26300 Marches (FR)
(74) Mandataire: Myon, Gérard Jean-Pierre
(86) Numéro de dépôt international: PCT/FR2011/051988
(87) Numéro de publication internationale: WO 2012/028821

(56) Documents cités:
- US-A1- 2005 178 215
- US-B1- 6 311 566

## Description

La présente invention concerne une bielle pour mécanisme aéronautique. L'invention concerne également un mécanisme aéronautique comprenant une telle bielle, notamment un système actionneur de volet. Le domaine de l'invention est celui de la construction aéronautique, qui nécessite d'évaluer les contraintes mécaniques subies par un mécanisme et, en particulier, par la ou les bielles qui le composent.

De manière classique dans le domaine de l'industrie mécanique, des pièces soumises à des efforts de traction et/ou de compression peuvent comprendre un élément élastiquement déformable associé à un capteur à jauges de contraintes, de façon à mesurer une déformation élastique pour évaluer ces efforts. Pour réaliser une mesure précise, l'amplitude de la déformation élastique doit être relativement grande sous les efforts couramment subis en mode de fonctionnement normal.

Toutefois, une bielle de mécanisme aéronautique est dimensionnée pour supporter des efforts critiques, dans un mode de fonctionnement défaillant, très largement supérieurs aux efforts qui s'exercent en fonctionnement normal. Or, de tels efforts critiques risquent d'engendrer une déformation plastique de l'élément élastiquement déformable, ce qui le rend inutilisable et impose son remplacement pour pouvoir réaliser à nouveau des mesures d'efforts.

EP-A-2 067 697 décrit une telle bielle pour la construction aéronautique, comprenant au moins un arbre destiné à transmettre des efforts exercés essentiellement en traction et/ou en compression lorsque la bielle est en service. Un élément élastiquement déformable est solidaire de l'arbre de façon à reprendre ces efforts, et configuré pour se déformer élastiquement sous l'effet de ces efforts. Un ou plusieurs capteurs à jauges de contraintes sont associés à l'élément déformable de façon à mesurer la déformation élastique pour évaluer les efforts. Par ailleurs, la bielle comporte un organe de sécurité solidaire de l'élément déformable et distant de l'arbre lorsque la bielle est au repos. Cet organe de sécurité est prévu pour limiter les mouvements de l'arbre lorsque la déformation élastique dépasse une limite déterminée, de façon à transmettre la partie excédentaire des efforts. Un tel organe de sécurité permet donc de protéger l'élément élastiquement déformable, en le « court-circuitant » lorsque les efforts dépassent sa limite élastique. L'élément ainsi protégé peut présenter une déformation élastique de grande amplitude en fonctionnement normal, de façon à effectuer des mesures d'efforts précises.

Cependant, une telle bielle n'est pas entièrement satisfaisante. En effet, pour réaliser des mesures précises, la bielle doit comporter un nombre important de jauges extensométriques, de préférence au moins quatre jauges. De ce fait, la chaine de post-traitement électronique associée à ces jauges est complexe. Par ailleurs, ces jauges sont généralement collées sur l'élément déformable. Toutefois, la colle résiste mal au vieillissement dans les conditions de fonctionnement de la bielle et de l'élément déformable. Ainsi, l'utilisation de cette colle crée une contrainte d'étanchéité importante et réduit la fiabilité des mesures dans le temps.

US-A-2005 178 215 décrit une autre bielle pour la construction aéronautique. Cette bielle comprend un ressort qui est connecté à un arbre et configuré, d'une part, pour reprendre les efforts exercés sur l'arbre et, d'autre part, présenter une déformation élastique sous l'effet de ces efforts. La bielle comprend également un capteur associé au ressort et configuré pour déterminer les efforts. Le capteur est logé à ses deux extrémités dans le ressort. L'utilisation d'un tel ressort n'est pas entièrement satisfaisante, notamment en termes de précision de mesure.

Le but de la présente invention est de proposer une bielle permettant d'effectuer des mesures d'efforts de manière simple, précise et fiable, durant tout son cycle de vie.

A cet effet, l'invention a pour objet une bielle pour système actionneur aéronautique, comprenant au moins un arbre configuré pour transmettre des efforts exercés essentiellement en traction et/ou en compression selon un axe longitudinal de la bielle lorsque la bielle est en service, un élément élastiquement déformable qui est connecté à l'arbre et configuré, d'une part, pour reprendre les efforts exercés sur l'arbre et, d'autre part, présenter une déformation élastique sous l'effet de ces efforts, l'élément déformable comprenant une partie périphérique qui est rigidement liée à un organe de la bielle dans lequel l'arbre est monté coulissant, et des moyens de mesure associés à l'élément déformable et configurés pour déterminer les efforts, les moyens de mesure étant au moins partiellement logés dans l'élément déformable.

Cette bielle est caractérisée en ce que l'élément déformable comprend une partie centrale qui est allongée suivant l'axe longitudinal de la bielle, qui est rigidement liée à l'arbre et dans laquelle les moyens de mesure sont au moins partiellement logés, et une partie intermédiaire qui s'étend transversalement à la partie centrale et qui relie la partie centrale et la partie périphérique.

Ainsi, l'invention permet d'améliorer la précision et la fiabilité du système de mesure. En particulier, les moyens de mesure sont des moyens de mesure de déplacement, configurés pour déterminer les efforts à partir du déplacement de l'élément déformable. Cet élément déformable se présente comme un diaphragme, dont la structure et les déformations sont bien maîtrisées. En raison de l'agencement relatif des moyens de mesure et de l'élément déformable, ces mesures peuvent être effectuées de manière réactive lors des déformations de cet élément. Par ailleurs, le risque que les moyens de mesure se désolidarisent de l'élément déformable est réduit. Autrement dit, le système de mesure présente une résistance améliorée au vieillissement. Egalement, ce système de mesure fonctionne de manière simple, sans nécessiter une chaine de post-traitement électronique complexe.

Selon d'autres caractéristiques avantageuses de l'invention, prises isolément ou en combinaison :
- la partie centrale, la partie périphérique et la partie intermédiaire de l'élément déformable sont venues de matière ;
- les moyens de mesure comprennent au moins un capteur de déplacement linéaire, ce capteur étant au moins partiellement logé dans l'élément déformable ;
- les moyens de mesure comprennent au moins deux capteurs de déplacement linéaire positionnés parallèlement entre eux de part et d'autre de l'axe longitudinal de la bielle, chaque capteur étant au moins partiellement logé dans l'élément déformable ;
- chaque capteur est rigidement fixé à l'élément déformable et mobile dans un élément complémentaire configuré pour transformer une mesure de déplacement du capteur en une valeur d'efforts exercés sur l'élément déformable ;
- les moyens de mesure sont plus rapprochés de l'axe longitudinal de la bielle que de la périphérie de la bielle ;
- l'arbre est disposé de manière coulissante dans l'organe qui est rigidement lié à la partie périphérique de l'élément déformable, de sorte qu'un déplacement de l'arbre sous l'effet des efforts entraîne un déplacement de la partie centrale de l'élément déformable ;
- l'arbre comprend des moyens de butée qui sont, d'une part, distants de l'organe et de l'élément déformable lorsque la bielle est au repos et, d'autre part, configurés pour limiter les efforts exercés en traction et/ou en compression sur l'élément déformable lorsque la déformation élastique dépasse une limite déterminée, de façon à transmettre la partie excédentaire des efforts ;
- l'élément déformable est en acier inoxydable à haute limite élastique ou en titane ;
- la bielle comporte un boitier central et deux ensembles disposés symétriquement par rapport au boitier le long de son axe longitudinal, chaque ensemble comprenant un élément déformable, un arbre et des moyens de mesure.

L'invention a également pour objet un mécanisme aéronautique comprenant au moins une bielle telle que mentionnée ci-dessus. La bielle est interposée entre un actionneur rotatif et un panneau de volet de manière à transférer des efforts depuis l'actionneur rotatif et le panneau de volet. Le mécanisme aéronautique est configuré pour déplacer et maintenir le panneau de volet dans des positions extrêmes ou intermédiaires.

L'invention sera mieux comprise à la lecture de la description qui va suivre, donnée uniquement à titre d'exemple non limitatif et faite en référence aux dessins sur lesquels :
- la figure 1 est une représentation schématique d'un mécanisme aéronautique, comprenant un actionneur rotatif fixé sur une structure d'aéronef et connecté à un panneau de volet par une bielle conforme à l'invention ;
- la figure 2 est une vue en perspective de la bielle de la figure 1 ;
- la figure 3 est une vue en élévation de la bielle selon la flèche III à la figure 2 ;
- les figures 4, 5 et 6 sont des coupes, respectivement selon les lignes IV-IV, V-V et VI-VI à la figure 3 ;
- les figures 7 et 8 sont des vues à plus grande échelle, respectivement du détail VII à la figure 4 et du détail VIII à la figure 5 ; et
- la figure 9 est une vue à plus grande échelle de la figure 7, montrant un élément élastiquement déformable et des moyens de mesure appartenant à la bielle.

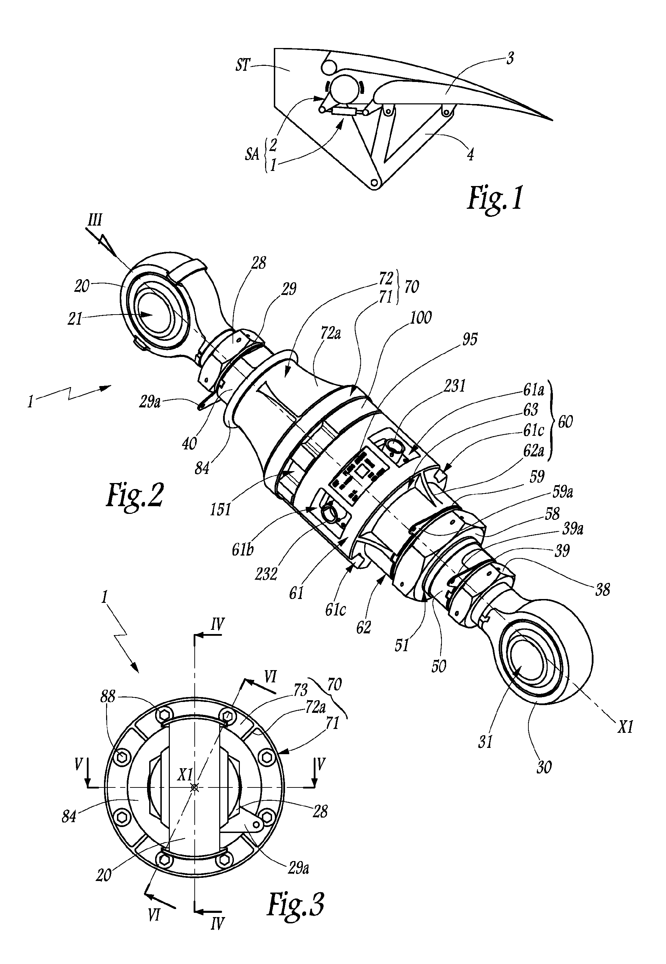

Sur la figure 1 est représenté un mécanisme aéronautique conforme à l'invention, du type système actionneur SA de volet, équipant un aéronef.

Le système actionneur SA comprend une bielle 1 et un actionneur rotatif 2, configurés pour déplacer un panneau de volet 3. Plus précisément, le panneau 3 peut être déplacé et maintenu par le système SA dans différentes positions extrêmes ou intermédiaires lors du fonctionnement de l'aéronef. L'actionneur rotatif 2 est fixé sur un élément de structure ST de l'aéronef, tandis que le panneau de volet 3 est relié à l'élément de structure ST par un organe 4 de levier pivotant. La bielle 1 est interposée entre l'actionneur 2 et le panneau de volet 3, de manière à transférer des efforts depuis l'actionneur 2 vers le panneau 3.

Sur les figures 2 à 9 est représentée la bielle 1 conforme à l'invention.

La bielle 1 s'étend selon un axe longitudinal X1 entre deux extrémités formées par des embouts respectifs 20 et 30, lesquels sont destinés à être liés aux autres éléments du mécanisme aéronautique SA, à savoir l'actionneur 2 et le panneau de volet 3. A cet effet, chaque embout 20 ou 30 est percé d'un trou débouchant 21 ou 31 destiné à recevoir une partie complémentaire d'un de ces éléments 3 ou 4. Egalement, chaque embout 20 et 30 inclut un alésage central, respectivement 23 et 33, sur une partie de sa longueur afin de réduise sa masse.

La bielle 1 comprend un premier arbre 40 auquel est solidarisé l'embout 20 au moyen d'un filetage 22 et d'un écrou 28 en appui sur une rondelle 29. De même, la bielle 1 comprend un deuxième arbre 50 auquel est solidarisé l'embout 30 au moyen d'un filetage 32 et d'un écrou 38 en appui sur une rondelle 39. Chaque rondelle 29 et 39 est du type « Nord-Lock » (marque déposée), constituée par deux rondelles identiques à cames et dentures qui empêchent le desserrage des écrous 28 et 38, ainsi que d'une troisième rondelle munie d'un organe en saillie, respectivement 29a et 39a, destiné à faciliter leur verrouillage et leur manipulation.

La bielle 1 comprend également un diaphragme 100 interposé entre un boitier 60 et un capot 70, lesquels relient les arbres 40 et 50 entre eux.

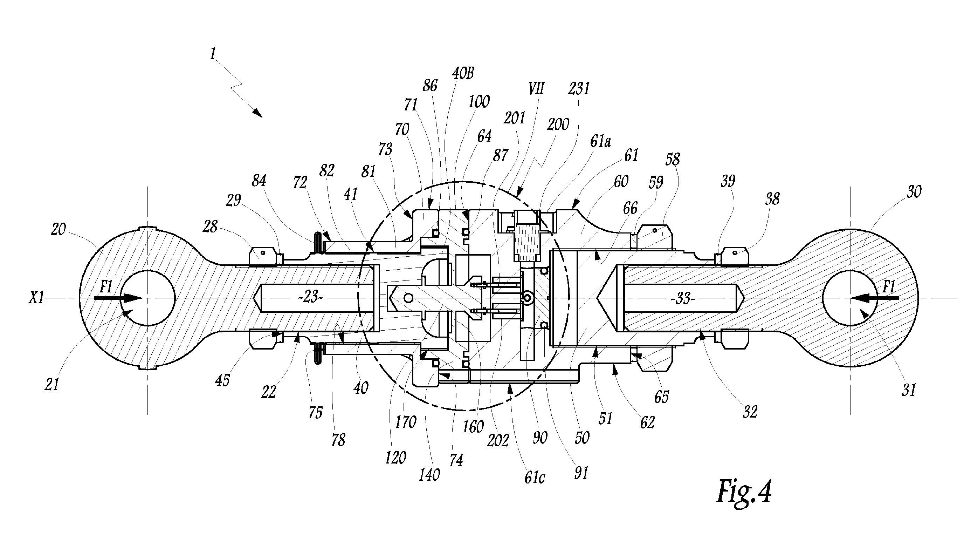

Lorsque la bielle 1 est en service, ces éléments 40, 50, 60, 70 et 100 sont configurés pour transmettre des efforts de l'embout 20 vers l'embout 30 et réciproquement. De tels efforts s'exercent essentiellement en traction ou en compression. Dans l'exemple de la figure 4, les embouts 20 et 30 sont soumis à une force de compression F1 qui s'exerce selon l'axe X1.

Le boîtier 60 présente deux surfaces cylindriques 61 et 62 qui s'étendent selon l'axe X1 et sont reliées par une surface annulaire transverse 63 perpendiculaire à l'axe X1. Le diamètre de la surface 61 est supérieur au diamètre de la surface 62. Des rainures 62a s'étendent entre la surface 62 et la surface 63. Le boîtier 60 présente une première surface d'extrémité annulaire 64 qui s'étend perpendiculairement à l'axe X1 du côté de la surface 61, et une deuxième surface d'extrémité annulaire 65 qui s'étend perpendiculairement à l'axe X1 du côté de la surface 62. Un élément annulaire 64a est disposé en saillie sur la surface 64.

Un alésage taraudé 66 s'étend depuis la surface 65 vers l'intérieur du boitier 60 et est prévu pour recevoir l'arbre 50, plus précisément une surface cylindrique filetée 51 de l'arbre 50. Ainsi, la position de l'arbre 50 dans le boitier 60 peut être réglée puis bloquée à l'aide d'un écrou 58 et une rondelle 59 en appui sur la surface 65. Cette rondelle 59 est du type « Nord-Lock » (marque déposée), constituée par deux rondelles identiques à cames et dentures qui empêchent le desserrage de l'écrou 58, ainsi que d'une troisième rondelle munie d'un organe en saillie 59a destiné à faciliter leur verrouillage et leur manipulation.

Dans la surface 61 sont délimitées une première cuvette 61 a dans laquelle est disposé un connecteur électrique 231, une deuxième cuvette dans laquelle est disposé un connecteur électrique 232, ainsi que plusieurs rainures 61c s'étendant parallèlement à l'axe X1. Egalement, une étiquette 95 est disposée sur la surface 61 entre les cuvettes 61 a et 61 b, prévue pour recevoir des informations d'identification de la bielle 1.

En variante non représentée, les cuvettes 61 a et 61 b, comprenant respectivement les connecteurs 231 et 232, sont diamétralement opposées par rapport à l'axe X1.

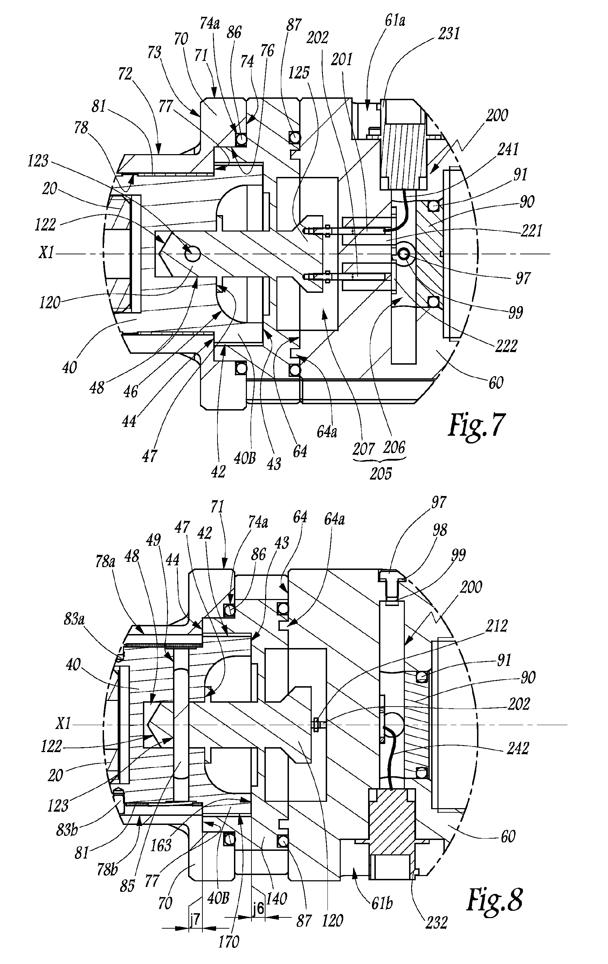

Comme visible aux figures 4 et 7, l'arbre 40 présente deux surfaces cylindriques 41 et 42 qui s'étendent selon l'axe X1 et sont reliées par une surface annulaire transverse 44 perpendiculaire à l'axe X1. Le diamètre de la surface 42 est supérieur au diamètre de la surface 41, tandis que la longueur de la surface 41 est supérieure à la longueur de la surface 41. L'arbre 40 présente également une première surface d'extrémité annulaire 43 qui s'étend perpendiculairement à l'axe X1 du côté de la surface 42, et une deuxième surface d'extrémité annulaire 45 qui s'étend perpendiculairement à l'axe X1 du côté de la surface 41 et contre laquelle la rondelle 29 est positionnée. L'arbre 40 présente également une cavité 46 ménagée au niveau de la surface 43. Une surface transverse 47 sensiblement plane est prévue au fond de cette cavité 46. Un alésage cylindrique 48 s'étend depuis cette surface 47 à l'intérieur de l'arbre 40, en direction de la surface 45. Un orifice 49 s'étend radialement à l'axe X1 de part et d'autre de l'arbre 40, en traversant la surface 41 et l'alésage 48.

Comme visible aux figures 4 et 7, le capot 70 présente deux surfaces cylindres 71 et 72 qui s'étendent selon l'axe X1 et sont reliées par une surface annulaire transverse 73. Le diamètre de la surface 71 est supérieur au diamètre de la surface 72. Des rainures 72a s'étendent entre la surface 72 et la surface 73. Le capot 70 présente une première surface d'extrémité annulaire 74 qui s'étend perpendiculairement à l'axe X1 du côté de la surface 71, et une deuxième surface d'extrémité annulaire 75 qui s'étend perpendiculairement à l'axe X1 du côté de la surface 72. Une cavité annulaire 74a est ménagée dans le capot 70 en débouchant de la surface 74 et est prévue pour recevoir un joint torique 86. Le capot 70 est traversé par un premier alésage intérieur 76 qui s'étend depuis la surface 74 et par un deuxième alésage intérieur 78 qui s'étend depuis la surface 75. Ces alésages 76 et 78 sont reliés par une surface transverse 77, et le diamètre de l'alésage 76 est supérieur au diamètre de l'alésage 78.

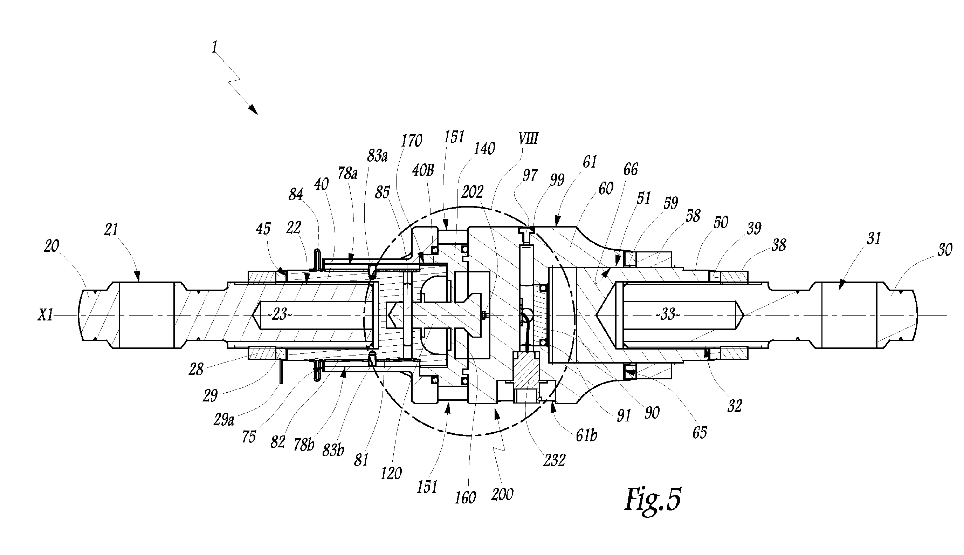

L'arbre 40 est monté dans cet alésage 78 et bloqué en rotation par rapport au capot 70 par l'intermédiaire de deux vis 83a et 83b, comme visible sur la figure 5. Chaque vis 83a et 83b est logée dans une rainure, respectivement 78a et 78b, du capot 70, et pénètre dans l'arbre 40 perpendiculairement à l'axe X1. Egalement, deux paliers 81 et 82 sont positionnés entre l'arbre 40 et le capot 70. Plus précisément, les paliers 81 et 82 sont logés dans la surface cylindrique 41 de l'arbre 40. Ainsi, l'arbre 40 est capable de se translater suivant l'axe X1 à l'intérieur du capot 70, avec les paliers 81 et 82 qui glissent dans l'alésage 78. Un soufflet 84 élastiquement déformable est soudé entre la surface d'extrémité 75 du capot 70 et la surface cylindrique 41 de l"arbre 40, réalisant ainsi l'étanchéité entre eux.

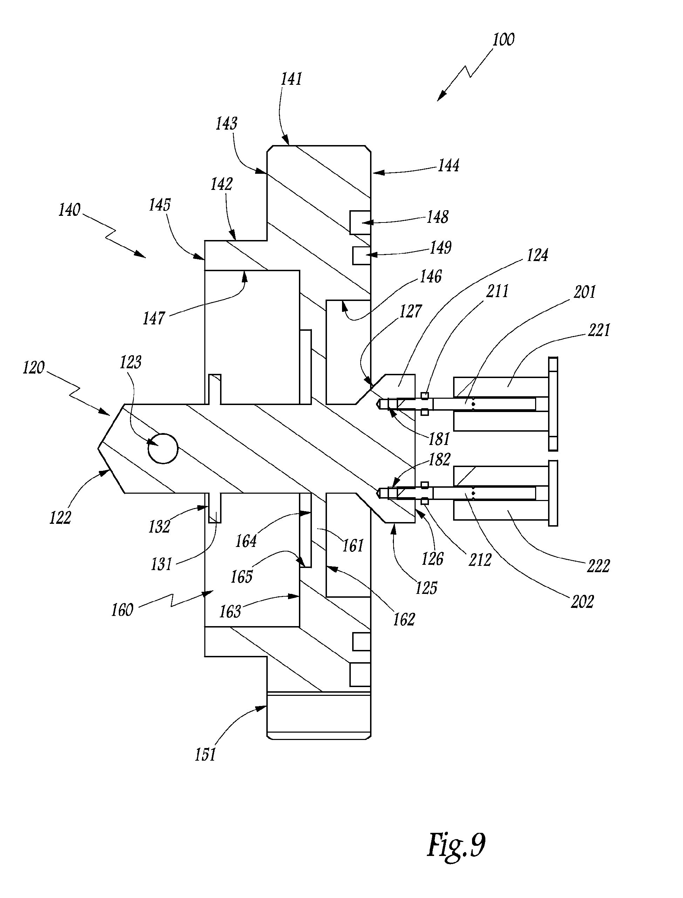

Comme visible en particulier sur la figure 9, le diaphragme 100 est formé d'une partie centrale 120 et d'une partie périphérique 140. L'adjectif « central » qualifie un élément qui se trouve proche de l'axe X1, tandis que l'adjectif « périphérique » qualifie un élément qui en est plus éloigné.

La partie centrale 120 présente une surface cylindrique 121 allongée suivant l'axe X1. Cette surface 121 présente une extrémité 122 avec une réduction de diamètre et un orifice 123 qui s'étend transversalement à l'axe X1, ainsi qu'une extrémité opposée 123 avec une augmentation de diamètre. Plus précisément, l'extrémité 124 présente une surface cylindrique 125 qui est reliée à la surface cylindrique 121 par une surface tronconique 127 inclinée à 45°, et une surface transverse 126 qui est centrée sur l'axe X1 et s'étend depuis la surface 125 du côté opposé à la surface 127. Une collerette annulaire 131 s'étend transversalement à l'axe X1 depuis la surface 121. En particulier, cette collerette 131 présente une surface annulaire transverse 132.

L'arbre 40 est solidarisé à la partie centrale 120 au moyen d'une goupille 85. Plus précisément, cette goupille 85 est ajustée dans l'orifice 49 de l'arbre 40 et dans l'orifice 123 qui traverse la partie centrale 120. En outre, la surface transverse 132 du diaphragme 100 est en appui plan contre la surface transverse 47 de l'arbre 40, tandis que la surface cylindrique 121 du diaphragme 100 est ajustée dans l'alésage 48 de l'arbre 40. Ainsi, l'arbre 40 peut transmettre au diaphragme 100 des efforts de compression et/ou de traction, tels que la force F1.

La partie périphérique 140 présente une première surface cylindrique 141 et une deuxième surface cylindrique 142 qui s'étendent selon l'axe X1 et sont reliées par une surface transverse 143. Le diamètre de la surface 141 est supérieur au diamètre de la surface 142. Une surface transverse 144 s'étend depuis la surface 141 en direction de l'axe X1, tandis qu'une surface transverse 145 s'étend depuis la surface 142 en direction de l'axe X1. Un alésage cylindrique 147 s'étend depuis la surface 145 en direction de la surface 144, tandis qu'un alésage cylindrique 146 s'étend depuis la surface 144 en direction de la surface 145. Le diamètre de la surface 147 est supérieur au diamètre de la surface 146. En outre, la surface 144 présente un premier logement annulaire 148 destiné à recevoir un joint torique 87, ainsi qu'un deuxième logement annulaire destiné à recevoir l'élément annulaire en saillie 64a du boitier 60. Egalement, plusieurs rainures 151 sont ménagées parallèlement à l'axe X1 au niveau de la surface 141.

La partie centrale 120 et la partie périphérique 140 du diaphragme 100 sont reliées par une partie intermédiaire 160 qui est apte à présenter une déformation élastique lorsque l'arbre 40 transmet la force F1 à la partie centrale 120. La partie intermédiaire 160 est venue de matière avec les parties centrale 120 et périphérique 140. La partie 160 présente une paroi 161 qui s'étend transversalement à l'axe X1 depuis la surface 121, entre l'extrémité 124 et la collerette 131, jusqu'à la partie périphérique 140. Plus précisément, une surface annulaire transverse 162 relie les surfaces 121 et 146 du côté de l'extrémité 124, tandis que des surfaces annulaires transverses 163 et 164, reliées par un alésage 164, s'étendent depuis la surface 121 jusqu'à la surface 147 du côté de l'extrémité 122 et la collerette 131. En pratique, la paroi 161 présente une partie mince au niveau de la surface 164 et une partie épaisse au niveau de la surface 163.

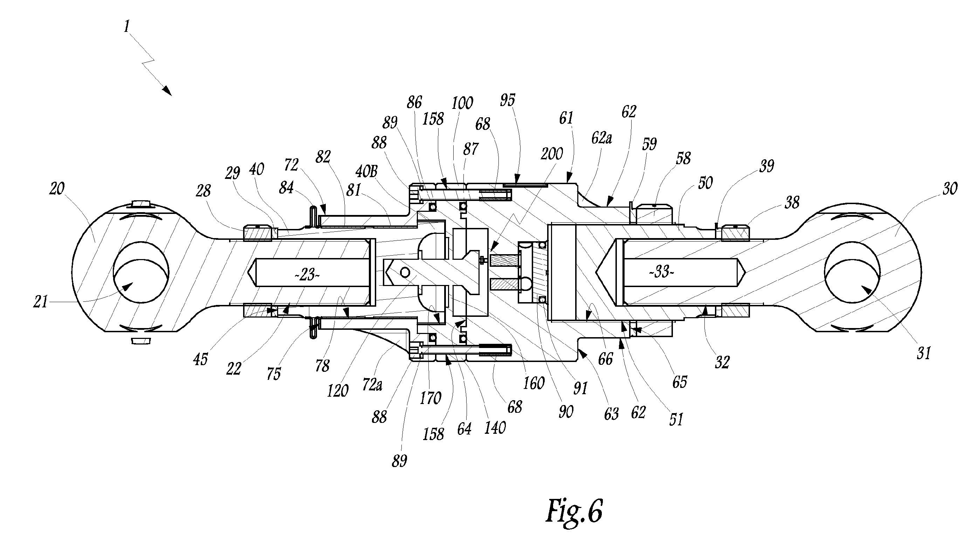

Les éléments 60, 70 et 100 sont rigidement assemblés au moyen de vis 88, comme visible sur les figures 3 et 6. Plus précisément, huit vis 88 pénètrent dans le capot 70, traversent le diaphragme 100 en passant par des orifices traversants 158 parallèles à l'axe X1, et sont fixées dans des éléments de filetage rapporté 68 qui sont logés dans le boitier 60. Une rondelle de blocage 89 est positionnée sous chaque tête de vis 88, dans le capot 70. Chaque rondelle 89 est du type « Nord-Lock » (marque déposée) afin d'empêcher le desserrage des vis 88 lorsque la bielle 1 est en service. A ce stade, on remarque que les diamètres des surfaces 61, 71 et 141 sont égaux, de manière que les éléments 60, 70 et 100 présentent une configuration extérieure monobloc lorsque la bielle 1 est assemblée.

Un système de mesure 200 est associé au diaphragme 100. Ce système 200 est du type LVDT (« linear variable differential transformer » en anglais, soit « transformateur différentiel linéaire variable » en français), configuré pour mesurer le déplacement de la partie centrale 120 sous la forme d'un signal électrique proportionnel à la force de tension ou de compression appliquée à la bielle 1. Plus précisément, le système 200 comprend deux capteurs de déplacement 201 et 202, comme détaillé ci-après.

A ce stade, on remarque que certaines bielles existantes comprennent des jauges de contrainte. Ces jauges sont composées de parties sensibles aux déformations permettant de mesurer ces déformations. De ce fait, les contraintes de montage doivent être anticipées et le système de mesure doit être ajusté après montage sur l'aéronef. Par ailleurs, la fiabilité des systèmes de mesure intégrant ces jauges est intrinsèquement plus faible. En effet, les jauges sont couramment collées (risque lié au process) et le signal de sortie doit être analysé par une chaine de traitement comprenant plusieurs composants électroniques (risque lié au matériel).

En revanche, la bielle 1 est équipée de capteurs de déplacement LVDT qui présentent une fiabilité plus importante que les jauges de contraintes. Chaque capteur 201 et 202 est fixé au diaphragme et configuré pour mesurer de faibles déformations mécaniques sensiblement axiales, par exemple avec une précision de l'ordre de 20µm dans les conditions de fonctionnement de la bielle 1. Cette méthode est particulièrement fiable et précise.

En pratique, chaque capteur 201 et 202 est un capteur de déplacement, et la rigidité de l'élément déformable est constante, ce qui permet de déterminer l'effort F1 par simple transformation linéaire à partir d'une mesure de déplacement de la partie centrale 120. A titre d'exemple, chaque capteur 201 et 202 est configuré pour fonctionner avec une charge nominale de détection de l'ordre de quelques kilonewtons, une gamme de mesure d'efforts de l'ordre d'une centaine de kilonewtons une gamme de températures comprises entre -55°C to +70°C, et une consommation électrique inférieur à 5W.

Comme visible sur la figure 9, le capteur 201 est logé en partie dans un orifice 181 ménagé dans l'extrémité 124 du diaphragme 100, tandis que l'autre extrémité du capteur 201 est positionnée dans un élément 221 comprenant un bobinage. Ainsi, lors du déplacement de l'extrémité 124, le capteur 201 est déplacé en translation parallèlement à l'axe X1 dans l'élément 221 avec une course de l'ordre du millimètre, par exemple égale à ± 1 mm, de sorte que le déplacement est mesuré et envoyé au connecteur électrique 231 par l'intermédiaire d'un câble 241, comme visible à la figure 7. L'élément 221 est rigidement fixé dans le boitier 60, par exemple à l'aide d'un élément de filetage rapporté, tandis que le capteur 201 est fixé dans l'orifice 181 par un écrou 211.

De même, le capteur 202 est logé en partie dans un orifice 182 ménagé dans l'extrémité 124 du diaphragme 100, tandis que l'autre extrémité du capteur 202 est positionnée dans un élément 222 comprenant un bobinage. Ainsi, lors du déplacement de l'extrémité 124, le capteur 202 est déplacé en translation parallèlement à l'axe X1 dans l'élément 222 avec une course de l'ordre du millimètre, de sorte que le déplacement est mesuré et envoyé au connecteur électrique 232 par l'intermédiaire d'un câble 242, comme visible à la figure 8. L'élément 222 est rigidement fixé dans le boitier 60, par exemple à l'aide d'un élément de filetage rapporté, tandis que le capteur 202 est fixé dans l'orifice 182 par un écrou 212.

En outre, les capteurs 201 et 202 sont plus rapprochés de l'axe longitudinal X1 que de la périphérie de la bielle 1, c'est-à-dire des surfaces 61, 71 et 141. Egalement, de manière avantageuse mais non obligatoire, les capteurs 201 et 202 sont positionnés sensiblement au centre de la bielle 1 suivant l'axe longitudinal X1, notamment entre 45% et 55% de la longueur totale de la bielle 1 considérée le long de l'axe longitudinal X1. En effet, un tel agencement permet conjointement d'améliorer la précision de mesure, de protéger le système de mesure 200 et de réduire l'encombrement de la bielle 1.

En fait, les deux capteurs 201 et 202 du système 200 sont prévus, d'une part, pour envoyer des signaux analogiques vers deux systèmes électroniques indépendants éloignés de la bielle 1 et, d'autre part, pour augmenter la fiabilité de la mesure du système 200.

En variante non représentée, le système de mesure 200 peut intégrer un seul capteur 201, centré ou non sur l'axe X1.

Selon une autre variante non représentée, le système de mesure 200 peut intégrer plus de deux capteurs 201 et 202, par exemple trois ou quatre capteurs logés au moins partiellement dans la partie centrale 120 du diaphragme 100.

Par ailleurs, le système 200 est logé dans une chambre étanche 205 constitué de deux parties 206 et 207. La partie 206 est délimitée dans le boitier 60, tandis que la partie 207 est délimitée entre le boitier 60 et le diaphragme 100. L'étanchéité de la partie 206 est assurée, d'une part, par un bouchon 90 muni d'un joint statique torique 91 et, d'autre part, par des joints statiques non représentés. En particulier, ces joints d'étanchéité sont disposés sous les connecteurs électriques 231 et 232 et sous une vis 97 montée dans le boitier 60, avec une rondelle 98 et un élément de filetage rapporté 99. L'étanchéité de la partie 207 est assurée par le joint statique torique 87 et la paroi 161 du diaphragme 100.

En outre, la bielle 1 est équipée du soufflet 84 et du joint 86, les éléments mobiles 40 et 120 ainsi que le système 200 sont protégés contre les intrusions de fluides et de matières solides.

Les différents modes de fonctionnement de la bielle 1 sont détaillés ci-après.

Lorsque la bielle 1 est en service selon un mode de fonctionnement normal, elle est soumise à des efforts de traction F1 d'intensité modérée, lesquels sont transmis de l'embout 20 à la partie périphérique 140 du diaphragme 100 via l'arbre 40, puis du boitier 60 à l'embout 30 via l'arbre 50. Dans ce cas, la partie intermédiaire 160 du diaphragme 100 se déforme élastiquement, et le système 200 mesure le déplacement de la partie centrale 120 du diaphragme 100.

Du côté du capot 70, le premier arbre 40 comporte une butée 40B qui s'étend radialement depuis l'axe X1 vers la partie périphérique 140. La butée 40B présente une symétrie cylindrique d'axe X1, avec des surfaces d'appui 43 et 44 qui sont planes, perpendiculaires à l'axe X1 et opposées, c'est-à-dire tournées l'une vers l'embout 20 et l'autre vers l'embout 30.

Le capot 70 est positionné en appui plan contre la partie périphérique 140 du diaphragme 100, auquel le capot 70 est solidarisé par l'intermédiaire des vis 88. Plus précisément, la surface cylindrique 142 est logée dans l'alésage 76, tandis que les surfaces transverses 74 et 143 sont mutuellement en appui. Ainsi, l'assemblage du capot 70 avec la partie périphérique 140 définit une cavité 170 qui encadre la butée 40B de l'arbre 40, comme visible en particulier à la figure 8.

Lorsque la bielle 1 est au repos, c'est-à-dire lorsqu'elle n'est soumise à aucun effort de traction ou de compression, la partie périphérique 140 et le capot 70 sont distants de l'arbre 40. Plus précisément, comme montré à la figure 8, un jeu j6 est présent entre les surfaces 43 et 163, tandis qu'un jeu j7 est présent entre les surfaces 44 et 77. En d'autres termes, la butée 40B peut se déplacer axialement dans la cavité 170, ce déplacement étant limité par le jeu j6 d'un côté et le jeu j7 de l'autre côté, mais ne peut pas s'échapper de cette cavité 170 après l'assemblage de la bielle 1.

Lorsque la bielle 1 est en service et qu'elle subit des efforts F1 modérés, la partie intermédiaire 160 se déforme élastiquement, ce qui entraîne un déplacement de la partie centrale 120 et des capteurs 201 et 202, ce qui permet d'évaluer les efforts F1.

En fonctionnement anormal ou défaillant, l'intensité des efforts exercés sur la bielle 1, en l'occurrence la force de compression F1, peut devenir très élevée, par exemple en cas de choc. Dans ce cas, la déformation élastique de la partie intermédiaire 160 atteint puis dépasse une limite prédéterminée.

Dès que cette limite est dépassée, la butée 40B empêche le mouvement de l'arbre 40 dans le sens de la force F1. Plus précisément, la surface 43 de la butée 40B vient en appui contre la surface 163 du diaphragme 100 dans un sens, ou bien la surface 44 de la butée 40B vient en appui contre la surface 77 du capot 70 dans l'autre sens. Ainsi, les contraintes mécaniques subies par la partie 160 se limitent aux contraintes correspondant à cette limite de déformation élastique. La partie excédentaire de la force F1 est transmise de l'arbre 40 à la partie périphérique 140 ou au capot 70, tandis que les parties 120 et 160 supportent une partie limitée de la force F1. En d'autres termes, la butée 40B remplit une fonction de sécurité mécanique qui « court-circuite » la partie intermédiaire 160 pour transmettre des efforts importants de l'arbre 40 à la partie périphérique 140.

A ce stade, on remarque que la butée 40B présente une symétrie cylindrique et que les surfaces d'appui 43 et 44 sont planes, axiales et opposées c'est-à-dire tournées l'une vers l'embout 20 et l'autre vers l'embout 30.

En variante non représentée, les surfaces d'appui 43 et 44 de la butée 40B peuvent présenter d'autres formes, par exemple planes et inclinées sur l'axe X1 de manière oblique. Dans ce cas, les surfaces d'appui complémentaires 163 et 77 présentent une forme adaptée.

Lorsque la bielle est au repos, les surfaces 43 et 163 sont séparées par une distance qui est égale au jeu j6 et inférieure à la limite de déformation élastique prévue pour la partie intermédiaire 160. Par conséquent, aucun effort n'est transmis entre les surfaces d'appui 43 et 163, ni donc entre la partie périphérique 140 et l'arbre 40, tant que la déformation élastique de la partie intermédiaire 160 dans la direction longitudinale définie par l'axe X1 demeure inférieure à cette limite. De même, les surfaces 44 et 77 sont séparées, lorsque la bielle 1 est au repos, par une distance qui est égale au jeu j7 et inférieure à cette limite. Par conséquent aucun effort n'est transmis entre les surfaces d'appui 44 et 77, ni donc entre la partie périphérique 140 et l'arbre 40, tant que l'allongement de la partie intermédiaire 160 dans la direction longitudinale définie par l'axe X1 demeure inférieur à cette limite.

Lorsque la bielle 1 travaille en traction, les surfaces d'appui 44 et 77 se rapprochent et le jeu j7 diminue. A l'inverse, lorsque la bielle 1 travaille en compression, les surfaces d'appui 43 et 163 se rapprochent et le jeu j6 diminue.

Lorsque la limite d'effort souhaitée sur la partie intermédiaire 160 est dépassée en traction, les surfaces d'appui 44 et 77 entrent en contact et transmettent, de l'arbre 40 à la partie périphérique 140 et au boîtier 60, la force F1 dont l'intensité est devenue trop grande pour effectuer sa transmission par la seule partie intermédiaire 160.

Inversement lorsque la limite d'effort souhaitée en compression est dépassée, les surfaces d'appui 43 et 163 entrent en contact et transmettent alors de l'arbre 40 à la partie périphérique 140 et au boîtier 60 les efforts de compression dont l'intensité est trop grande pour la seule partie intermédiaire 160.

Ainsi, les surfaces d'appui 43 et 44 forment des moyens de butée aptes à reprendre des efforts transmis par les surfaces 163 ou 77.

Les surfaces d'appui 43, 44, 163 et 77 permettent donc de protéger la partie intermédiaire 160 du diaphragme 100 en lui évitant toute déformation plastique et sollicitation critique en fatigue. On peut ainsi déterminer les efforts supportés par la bielle 1 en fonctionnement normal, sans risquer l'endommagement du diaphragme 100 en fonctionnement défaillant.

En pratique, à titre d'exemple non limitatif, les jeux j6 et j7 sont initialement égaux à quelques dixièmes de millimètres. A ce stade, on précise que le diaphragme 100, et notamment la partie intermédiaire 160, est avantageusement réalisé en acier inoxydable à haute limite élastique. Ainsi, le diaphragme 100 présente de préférence une résistance élastique Re comprise entre 800 et 1200 MPa et une résistance à la rupture Rm comprise entre 900 et 1200 MPa.

En alternative, le diaphragme 100 peut être réalisé dans tout type de matériau à module d'élasticité longitudinale (module de Young) élevé, tel que le titane (Ti). Par module d'élasticité longitudinale élevé, on entend un module supérieur à 100000 MPa. Toutefois, l'utilisation du titane nécessite un temps d'usinage plus long en raison des contraintes intrinsèques à ce matériau.

Le choix du matériau et le dimensionnement de la partie intermédiaire 160 permettent d'obtenir une déformation élastique relativement importante, ce qui augmente la précision des mesures des efforts F1 subis par la bielle 1. Cependant, plus la partie 160 doit se déformer, plus sa déformation risque de s'approcher de la zone plastique. Cependant, la butée 40B, le capot 70 et la partie périphérique 140 assurent dans ce cas la protection de la partie 160.

La limite d'effort souhaitée sur la partie 160 est ici sélectionnée, en traction et en compression, de façon à être atteinte pour un effort supérieur à celui de la mise en butée du «court-circuit » évoqué ci-dessus. En pratique, cet effort limite peut être défini comme étant de l'ordre d'une centaine de kilonewtons. Dans la plage de fonctionnement normal de la bielle 1, où les efforts sont compris entre -25kN et +25kN, la partie 160 procure une précision de l'ordre de quelques kilonewtons sur la détermination des efforts transmis par la partie 160. Par ailleurs, le dimensionnement de la butée 40B, du capot 70 et la partie périphérique 140, c'est-à-dire le dimensionnement des surfaces d'appui 43, 44, 163 et 77, leur permet de transmettre des efforts atteignant plusieurs centaines de kilonewtons.

Ainsi, la bielle 1 est adaptée pour effectuer des mesures d'efforts précises en fonctionnement normal, et protéger ses éléments constitutifs lors d'un fonctionnement défaillant. En pratique les moyens de mesure, incluant notamment les éléments 201, 202, 221 et 222, sont des moyens de mesure de déplacement, configurés pour déterminer les efforts à partir du déplacement de l'élément déformable. L'agencement du système de mesure 200 et de l'élément déformable 100 procure des avantages importants en termes de fiabilité et de résistance, tout au long du cycle de vie de la bielle 1.

En variante non représentée, la bielle comporte un boitier 60 central, ainsi que deux ensembles disposés symétriquement par rapport au boitier 60 le long de l'axe X1. Chaque ensemble comprend un capot 70, un diaphragme 100, un arbre 40 et un embout 20. De plus, chaque ensemble comprend un système de mesure 200 qui inclut un ou plusieurs capteurs 201 et 202. Autrement dit, la bielle comporte deux diaphragmes 100, chacun équipé d'un ou plusieurs capteurs qui sont au moins partiellement logés dans sa partie centrale 120.

## Revendications

1. Bielle (1) pour système actionneur (SA) aéronautique, comprenant au moins :
- un arbre (40) configuré pour transmettre des efforts (F1) exercés essentiellement en traction et/ou en compression selon un axe longitudinal (X1) de la bielle (1) lorsque la bielle est en service,
- un élément élastiquement déformable (100) qui est connecté à l'arbre (40) et configuré, d'une part, pour reprendre les efforts (F1) exercés sur l'arbre (40) et, d'autre part, présenter une déformation élastique sous l'effet de ces efforts (F1), l'élément déformable (100) comprenant une partie périphérique (140) qui est rigidement liée à un organe (70) de la bielle (1) dans lequel l'arbre (40) est monté coulissant, et
- des moyens (201, 202) de mesure associés à l'élément déformable (100) et configurés pour déterminer les efforts (F1), les moyens de mesure (201, 202) étant au moins partiellement logés dans l'élément déformable (100).
la bielle (1) étant **caractérisée en ce que** l'élément déformable (100) comprend :
- une partie centrale (120) qui est allongée suivant l'axe longitudinal (X1) de la bielle (1), qui est rigidement liée à l'arbre (40) et dans laquelle les moyens de mesure (201, 202) sont au moins partiellement logés, et
- une partie intermédiaire (160) qui s'étend transversalement à la partie centrale (120) et qui relie la partie centrale (120) et la partie périphérique (140).

2. Bielle (1) selon la revendication 1, **caractérisée en ce que** la partie centrale (120), la partie périphérique (140) et la partie intermédiaire (160) de l'élément déformable (100) sont venues de matière.

3. Bielle (1) selon l'une des revendications 1 ou 2, **caractérisée en ce que** les moyens de mesure comprennent au moins un capteur de déplacement linéaire (201 ; 202), ce capteur étant au moins partiellement logé dans l'élément déformable (100).

4. Bielle (1) selon l'une des revendications précédentes, **caractérisée en ce que** les moyens de mesure comprennent au moins deux capteurs de déplacement linéaire (201, 202) positionnés parallèlement entre eux de part et d'autre de l'axe longitudinal (X1) de la bielle (1), chaque capteur étant au moins partiellement logé dans l'élément déformable (100).

5. Bielle (1) selon l'une des revendications 3 ou 4, caractérisée en ce chaque capteur (201, 202) est rigidement fixé à l'élément déformable (100) et mobile dans un élément (221, 222) complémentaire configuré pour transformer une mesure de déplacement du capteur (201, 202) en une valeur d'efforts (F1) exercés sur l'élément déformable (100).

6. Bielle (1) selon l'une des revendications précédentes, **caractérisée en ce que** les moyens (201, 202) de mesure sont plus rapprochés de l'axe longitudinal (X1) de la bielle (1) que de la périphérie de la bielle (1).

7. Bielle (1) selon l'une des revendications précédentes, **caractérisée en ce que** l'arbre (40) est disposé de manière coulissante dans l'organe (70) qui est rigidement lié à la partie périphérique (140) de l'élément déformable (100), de sorte qu'un déplacement de l'arbre (40) sous l'effet des efforts (F1) entraîne un déplacement de la partie centrale (120) de l'élément déformable (100).

8. Bielle (1) selon l'une des revendications précédentes, **caractérisée en ce que** l'arbre (40) comprend des moyens (40B) de butée qui sont, d'une part, distants de l'organe (70) et de l'élément déformable (100) lorsque la bielle (1) est au repos et, d'autre part, configurés pour limiter les efforts exercés en traction et/ou en compression sur l'élément déformable (100) lorsque la déformation élastique dépasse une limite déterminée, de façon à transmettre la partie excédentaire des efforts (F1).

9. Bielle (1) selon l'une des revendications précédentes, **caractérisée en ce que** l'élément déformable (100) est en acier inoxydable à haute limite élastique ou en titane.

10. Bielle selon l'une des revendications précédentes, **caractérisée en ce qu'**elle comporte un boitier central (60) et deux ensembles disposés symétriquement par rapport au boitier (60) le long de son axe longitudinal (X1), chaque ensemble comprenant un élément déformable (100), un arbre (40) et des moyens de mesure (200).

11. Mécanisme aéronautique (SA) **caractérisé en ce qu'**il comprend au moins une bielle (1) selon l'une des revendications précédentes, **en ce que** la bielle (1) est interposée entre un actionneur rotatif (2) et un panneau de volet (3) de manière à transférer des efforts depuis l'actionneur rotatif et le panneau de volet, et **en ce que** le mécanisme aéronautique (SA) est configuré pour déplacer et maintenir le panneau de volet (3) dans des positions extrêmes ou intermédiaires.

## Patentansprüche

1. Koppelstange (1) für ein Einstellsystem (SA) in der Luftfahrt, mindestens umfassend:
- eine Achse (40), die ausgebildet ist, Kräfte (F1) zu übertragen, die hauptsächlich hinsichtlich Zug und/oder Druck gemäß einer Längsachse (X1) der Achse (1) ausgeübt werden, wenn die Achse im Betrieb ist,
- ein verformbares elastisches Element (100), das mit der Achse (40) verbunden ist und ausgebildet ist, einerseits die auf die Achse (40) ausgeübten Kräfte (F1) aufzunehmen und andererseits eine elastische Verformung unter der Wirkung dieser Kräfte (F1) aufzuweisen, wobei das verformbare Element (100) ein Umfangsteil (140) umfasst, das starr mit einem Organ (70) der Koppelstange (1) verbunden ist, in dem die Achse (40) gleitend montiert ist und
- Messmittel (201, 202), die dem verformbaren Element (100) zugeordnet sind und ausgebildet sind, die Kräfte (F1) zu bestimmen, wobei die Messmittel (201, 202) mindestens teilweise in dem verformbaren Element (100) gelagert sind,
wobei die Koppelstange (1) **dadurch gekennzeichnet ist, dass** das verformbare Element (100) umfasst:
- ein Mittelteil (120), das sich gemäß der Längsachse (X1) der Koppelstange (1) lang erstreckt ist, starr mit der Achse (40) verbunden ist und in dem die Messmittel (201, 202) mindestens teilweise gelagert sind und
- ein Zwischenteil (160), das sich quer zum Mittelteil (120) erstreckt und das das Mittelteil (120) und das Umfangsteil (140) verbindet.

2. Koppelstange (1) nach Anspruch 1, **dadurch gekennzeichnet, dass** das Mittelteil (120), das Umfangsteil (140) und das Zwischenteil (160) des verformbaren Elementes (100) aus einem Teil bestehen.

3. Koppelstange (1) nach einem der Ansprüche 1 oder 2, **dadurch gekennzeichnet, dass** die Messmittel mindestens einen Sensor (201, 202) der linearen Bewegung umfassen, wobei dieser Sensor mindestens teilweise in dem verformbaren Element (100) gelagert ist.

4. Koppelstange (1) nach einem der vorhergehenden Ansprüche, **dadurch gekennzeichnet, dass** die Messmittel mindestens zwei Sensoren (201, 202) der linearen Bewegung umfassen, die zueinander parallel beidseitig der Längsachse (X1) der Koppelstange (1) positioniert sind, wobei jeder Sensor mindestens teilweise in dem verformbaren Element (100) gelagert ist.

5. Koppelstange (1) nach einem der Ansprüche 3 oder 4, **dadurch gekennzeichnet, dass** jeder Sensor (201, 202) starr an dem verformbaren Element (100) befestigt ist und in einem komplementären Element (221, 222) beweglich ist, das ausgebildet ist, eine Wegmessung des Sensors (201, 202) in einen Wert der Kräfte (F1) umzuwandeln, die auf das verformbare Element (100) ausgeübt werden.

6. Koppelstange (1) nach einem der vorhergehenden Ansprüche, **dadurch gekennzeichnet, dass** die Messmittel (201, 202) näher an der Längsachse (X1) der Koppelstange (1) als am Umfang der Koppelstange (1) liegen.

7. Koppelstange (1) nach einem der vorhergehenden Ansprüche, **dadurch gekennzeichnet, dass** die Achse (40) in gleitender Weise in dem Organ (70) angeordnet ist, das starr mit dem Umfangsteil (140) des verformbaren Elements (100) verbunden ist, derart, dass eine Bewegung der Achse (40) unter der Wirkung der Kräfte (F1) eine Bewegung des Mittelteils (120) des verformbaren Elementes (100) herbeiführt.

8. Koppelstange (1) nach einem der vorhergehenden Ansprüche, **dadurch gekennzeichnet, dass** die Achse (40) Anschlagmittel (40B) umfasst, die einerseits zu dem Organ (70) und dem verformbaren Element (100) beabstandet sind, wenn die Koppelstange (1) in der Ruhestellung ist, und andererseits ausgebildet sind, die Kräfte, die im Zug und/oder Druck auf das verformbare Element (100) ausgeübt werden, zu begrenzen, wenn die elastische Verformung eine vorbestimmte Schwelle überschreitet, um so den überschüssigen Teil der Kräfte (F1) umzuwandeln.

9. Koppelstange (1) nach einem der vorhergehenden Ansprüche, **dadurch gekennzeichnet, dass** das verformbare Element (100) ein rostbeständiger Stahl mit hoher Elastizitätsgrenze oder Titan ist.

10. Koppelstange nach einem der vorhergehenden Ansprüche, **dadurch gekennzeichnet, dass** sie ein Mittelgehäuse (60) und zwei Anordnungen aufweist, die symmetrisch in Bezug auf das Gehäuse (60) längs der Längsachse (X1) angeordnet sind, wobei jede Anordnung ein verformbares Element (100), eine Achse (40) und Messmittel (200) aufweist.

11. Mechanismus (SA) für die Luftfahrt, **dadurch gekennzeichnet, dass** er mindestens eine Koppelstange (1) nach einem der vorhergehenden Ansprüche umfasst, dass die Koppelstange zwischen einem sich drehenden Einstellelement (2) und einer Klappenwand (3) derart angeordnet ist, dass Kräfte von dem drehenden Einstellelement und der Klappenwand übertragen werden und dass der Mechanismus (SA) für die Luftfahrt ausgebildet ist, die Klappenwand (3) in End- oder Zwischenstellungen zu bewegen und zu halten.

## Claims

1. Connecting rod (1) for aeronautical actuating system (SA), comprising at least:
- one shaft (40) configured to transmit forces (F1) applied essentially in traction and/or in compression along a longitudinal axis (X1) of the connecting rod (1) when the connecting rod is in service,
- an elastically deformable element (100) which is connected to the shaft (40) and configured, on the one hand, to react to the forces (F1) applied to the shaft (40) and, on the other hand, to have an elastic deformation under the effect of these forces (F1), with the deformable element (100) comprising a peripheral part (140) which is rigidly connected to a member (70) of the connecting rod (1) wherein the shaft (40) is slidably mounted, and
- measurement means (201, 202) associated with the deformable element (100) and configured to determine the forces (F1), with the measurement means (201, 202) being at least partially housed in the deformable element (100).
the connecting rod (1) being **characterised in that** the deformable element (100) comprises:
- a central part (120) which is elongate along the longitudinal axis (X1) of the connecting rod (1), which is rigidly connected to the shaft (40) and in which the measurement means (201, 202) are at least partially housed, and
- an intermediate part (160) which runs transversally to the central part (120) and which connects the central part (120) and the peripheral part (140).

2. Connecting rod (1) according to claim 1, **characterised in that** the central part (120), the peripheral part (140) and the intermediate part (160) of the deformable element (100) are integrally formed.

3. Connecting rod (1) according to one of claims 1 or 2, **characterised in that** the measurement means include at least one linear displacement sensor (201; 202), this sensor being at least partially housed in the deformable element (100).

4. Connecting rod (1) according to one of the preceding claims, **characterised in that** the measurement means include at least two linear displacement sensors (201, 202) positioned parallel to one another on either side of the longitudinal axis (X1) of the connecting rod (1), with each sensor being at least partially housed in the deformable element (100).

5. Connecting rod (1) according to one of claims 3 or 4, **characterised in that** each sensor (201, 202) is rigidly fixed to the deformable element (100) and mobile in a complementary element (221, 222) configured to transform a displacement measurement of the sensor (201, 202) into a value of forces (F1) applied to the deformable element (100).

6. Connecting rod (1) according to one of the preceding claims, **characterised in that** the measurement means (201, 202) are closer to the longitudinal axis (X1) of the connecting rod (1) than to the periphery of the connecting rod (1).

7. Connecting rod (1) according to one of the preceding claims, **characterised in that** the shaft (40) is arranged slidingly in the member (70) which is rigidly connected to the peripheral part (140) of the deformable element (100), such that a displacement of the shaft (40) under the effect of the forces (F1) results in a displacement of the central part (120) of the deformable element (100).

8. Connecting rod (1) according to one of the preceding claims, **characterised in that** the shaft (40) comprises means of abutment (40B) which are, on the one hand, at a distance from the member (70) and from the deformable element (100) when the connecting rod (1) is at rest and, on the other hand, configured to limit the forces applied in traction and/or in compression on the deformable element (100) when the elastic deformation exceeds a determined limit, in such a way as to transmit the excess portion of the forces (Fl).

9. Connecting rod (1) according to one of the preceding claims, **characterised in that** the deformable element (100) is made of high-strength stainless steel or of titanium.

10. Connecting rod according to one of the preceding claims, **characterised in that** it comprises a central case (60) and two units arranged symmetrically in relation to the case (60) along its longitudinal axis (X1), with each unit comprising a deformable element (100), a shaft (40) and measurement means (200).

11. Aeronautical mechanism (SA) **characterised in that** it comprises at least one connecting rod (1) according to one of the preceding claims, **in that** the connecting rod (1) is interposed between a rotary actuator (2) and a flap panel (3) so as to transfer force from the rotary actuator and the flap panel, and **in that** the aeronautical mechanism (SA) is configured to move the flap panel (3) and hold it in extreme or intermediary positions.
